# EUROPEAN PATENT APPLICATION

(11) **EP 4 844 673 A1**
(43) Date of publication of application: **25.11.2026**
(21) Application number: 25223270.7
(22) Date of filing: 15.12.2025
(51) Int. Cl.: G06T 5/92, G06T 5/94, G06V 10/60

(54) **FACE DOMINATION TONE MAPPING**

(30) Priority: 22.05.2025 US 202519215675
(71) Applicant: INTEL Corporation, Santa Clara, CA 95054 (US)
(72) Inventor: GRILIKHES, Dmitry, 7630604 Rehovot (IL); SEMENJATSHENCO, Andrey, 5337215 Givataim (IL); SAGI, Tamir, 3440328 Haifa (IL)
(74) Representative: HGF

(57) **Abstract**

Techniques for improving image quality of an image including a face by increasing the contrast in the face portion of the image. Tone mapping techniques provided herein divide the dynamic range into three parts based on a detected primary face in the image. The first part includes details darker than the darkest point of the face, the second part includes the pixels of the face, and the third part includes details brighter than the face. The second part of the tone mapping curve is generated such that the tone mapping curve enhances facial clarity, ensuring that facial features are clear and naturally represented. Overall, the tone mapping systems and methods are computationally efficient and provide dynamic adaptability, adjusting for varying lighting conditions in real-time, and allowing for seamless integration into real-time image processing systems.

## Description

### Technical Field

This disclosure relates generally to image processing, and in particular to tone mapping to enhance facial details in images and videos.

### Background

Most modern cameras produce high dynamic range (HDR) images. HDR images typically undergo a tone mapping transformation in an attempt to improve the recognizability of objects in the image scene. Additionally, tone mapping can address the challenges posed by variable lighting conditions encountered in applications such as video conferencing and digital photography. One goal of tone mapping is often to ensure good representation of facial details. This is particularly important in video conferencing and video chats, especially when the face is poorly lit or set against a very bright background. In such cases, the face is significantly more important than other details in the image, even if it occupies only a small portion of the dynamic range at the tone mapping input.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an example overview of an image processing framework that can be used for calibration and/or training, in accordance with various embodiments.
FIG. 2 illustrates an example of image processing, in accordance with various embodiments.
FIGS. 3A and 3B illustrate tone mapping curves, in accordance with various embodiments.
FIG. 4 illustrates an example of image processing, in accordance with various embodiments.
FIGS. 5A and 5B illustrate tone mapping curves, in accordance with various embodiments.
FIG. 6 is a flow chart illustrating a method of face discrimination tone mapping, in accordance with various embodiments.
FIG. 7 is a block diagram of an example computing device, in accordance with various embodiments.

### Detailed Description

### Overview

HDR images typically undergo a tone mapping transformation in an attempt to improve the recognizability and image quality of objects in the image scene. One goal of tone mapping is often to ensure good representation of facial details, which is particularly important in video conferencing and video chats, and can be challenging when the face is poorly lit or set against a very bright background. In such cases, the face often occupies only a small portion of the dynamic range at the tone mapping input but is significantly more important than other details in the image.

Traditional tone mapping techniques often result in either overly compressed tonal regions or uneven distribution of brightness levels, thereby compromising image clarity. Some techniques linearly stretch the dynamic range, thereby destroying the bright details of the image. Other techniques apply nonlinear tone mapping to bring the average brightness of the face to a desired value, but do not take the dynamic range of the face into account, focusing solely on correctly representing its average brightness. Such tone mapping techniques can result in images that fail to adequately preserve subtle details and/or do not retain a natural overall appearance. Systems and methods are provided herein for tone mapping and tone adjustment techniques focusing on facial regions, to enhance image and video quality. In some examples, to preserve the details of the human face, a selected portion of the dynamic range of the image is allocated to the face, and other image details are compressed into the remaining portion of the overall dynamic range. In various implementations, the systems and methods discussed herein are optimized for integration into hardware platforms such as Image Processing Units (IPUs) and System-on-Chip (SOC) architectures.

According to various aspects, the tone mapping techniques provided herein divide the dynamic range into three (unequal) parts based on a detected primary face in the image. The first part includes details darker than the darkest point of the face, the second part includes the pixels of the face, and the third part includes details brighter than the face. The tone mapping systems and methods discussed herein improve facial clarity, ensuring that facial features are clear and naturally represented. Additionally, the tone mapping techniques provide dynamic adaptability, adjusting for varying lighting conditions in real-time. Furthermore, the tone mapping techniques discussed herein are computationally efficient, and are designed for seamless integration into real-time image processing systems.

For purposes of explanation, specific numbers, materials, and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A and/or B" or the phrase "A or B" means (A), (B), or (A and B). For the purposes of the present disclosure, the phrase "A, B, and/or C" or the phrase "A, B, or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value based on the input operand of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the input operand of a particular value as described herein or as known in the art.

In addition, the terms "comprise," "comprising," "include," "including," "have," "having" or any other variation thereof, are intended to cover a non-exclusive inclusion. For example, a method, process, device, or system that comprises a list of elements is not necessarily limited to only those elements but may include other elements not expressly listed or inherent to such method, process, device, or systems. Also, the term "or" refers to an inclusive "or" and not to an exclusive "or."

The systems, methods, and devices of this disclosure each have several innovative aspects, no single one of which is solely responsible for all desirable attributes disclosed herein. Details of one or more implementations of the subject matter described in this specification are set forth in the description below and the accompanying drawings.

### Example Tone Mapping Framework

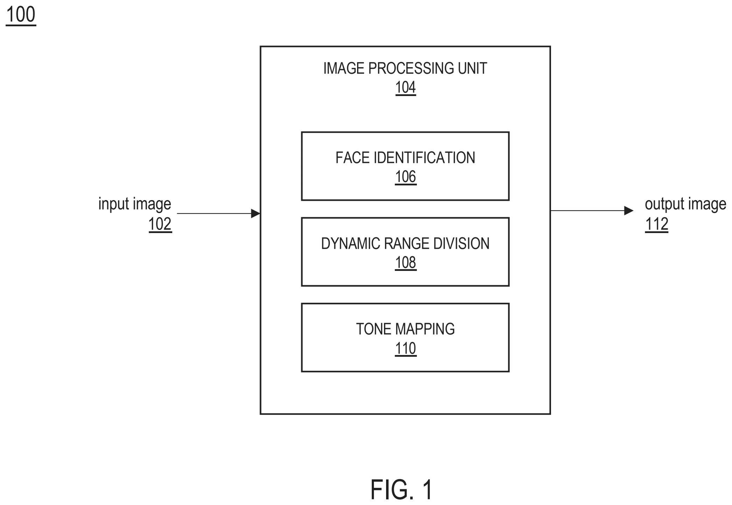

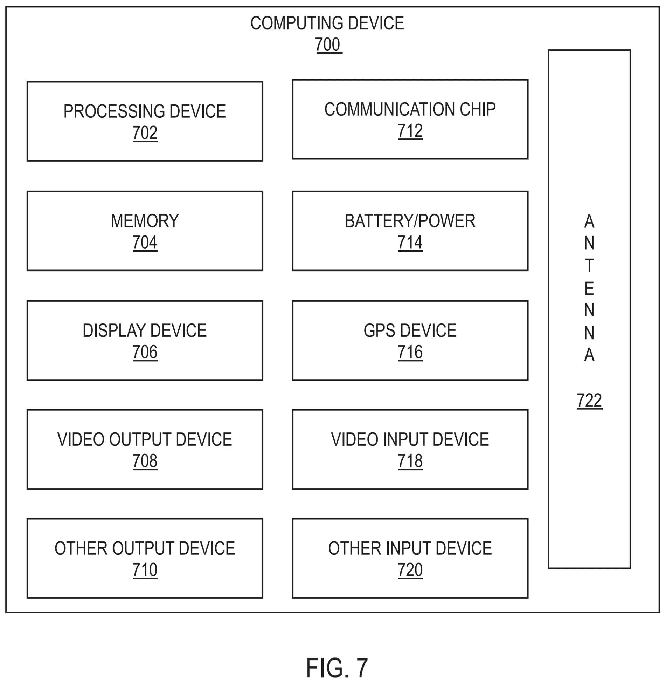

FIG. 1 illustrates an example overview of a tone mapping framework 100 that can be used for processing images, in accordance with various embodiments. In some examples, the tone mapping framework 100 can be used to process any image, and the determination that an image includes a face can be determined at the image processing unit 104. When the image processing unit 104 determines that an image includes a face, the image can be processed with face domination tone mapping as described herein. In some examples, the tone mapping framework 100 is a part of a computing device 700 as described with respect to FIG. 7. In some examples, the tone mapping framework 100 is a part of a neural network.

As shown in FIG. 1, an image processing unit 104 receives an input image 102. In some implementations, the image processing unit 104 determines a dynamic range of the brightness level of each pixel in the input image 102. The image processing unit 104 includes a face identification module 106 that detects one or more faces in the image and identifies a primary face in the image. The image processing unit 104 includes a dynamic range division module 108 At the dynamic range division module 108, the dynamic range is divided into three parts based on data from the detected primary face in the image. In particular, a first part of the dynamic range includes details darker than the darkest point of the face, a second part includes the pixels of the face, and a third part includes details brighter than the face.

The image processing module 104 includes a tone mapping module 110. In various examples, the tone mapping module 110 generates a tone mapping curve based on the three parts of the dynamic range from the dynamic range division module 108. In particular, the tone mapping module 110 generates a main tone mapping curve for the face, a dark details portion of the tone mapping curve, and a bright details portion of the tone mapping curve.

The tone mapping curve for the face represents the main part of the tone mapping curve, which represents the face. The tone mapping curve for the face is based on parameters configured for the reproduction of facial details: first parameters representing the start of the desired face range, second parameters representing a gamma value that harmonizes the midtones, and third parameters representing the end of the desired face range. The parameters account for dynamically determined data on the darkest and brightest points of the face at the input of the tone mapping determination process. In some examples, five parameters are used for determination of the tone mapping curve: Xdark, Ydark, Xbright, Ybright, and harmonization gamma.

The dark details portion of the tone mapping curve represents details that are darker than the darkest part of the face. Darker details are represented using a linear portion of the tone mapping curve that connects the origin point (input-output) with the point Xdark, Ydark as determined based on the tone mapping curve for the face.

The bright details portion of the tone mapping curve represents details that are brighter than the brightest part of the face. The bright details portion of the tone mapping curve is the portion between the end of the face tone mapping range and the white point (*i.e.,* the end of the range). The bright details portion of the tone mapping curve is generated such that at the point Xbright, Ybright (as determined based on the tone mapping curve for the face), the bright details portion of the tone mapping curve smoothly and continuously connects with the tone mapping curve for the face. A smooth connection can be achieved at the level of the first derivative, ensuring no noticeable artifacts. Thus, the tone mapping systems and methods provided herein provide a seamless and artifact-free connection between the face-specific portion of the tone mapping curve and the brighter portion of the image.

The harmonization gamma value defines the brightness of the output image for tone mapping curve for the face, such that the brightness of the output image equals the brightness of the input image to the power of gamma (y = x^gamma). In some examples, the gamma value is determined based on a target image brightness. In some examples, the gamma value is determined using iterative approximation. In various examples, the tone mapping curve for the face is in the form of y = x^gamma. The gamma value for the face part of the image is based on the target brightness of the face.

In general, the tone mapping module 110 determines the output brightness of each pixel in the output image 112 by determining a gain, as represented by the tone mapping curve. The gain can be the value by which each pixel's measured input brightness level is multiplied. In general, the gain is a function of the input brightness and the tone mapping curve. In particular, when the face identification module 106 determines that there is a face in the input image 102, the dynamic range division module 108 divides the image into multiple parts, as described above, the tone mapping module 110 generates a tone mapping curve that that preserves the details of the face. When the face identification module 106 does not find a face in the input image 102, the tone mapping module 110 can use a conventional tone mapping curve and perform typical tone mapping. The tone mapping module 110 generates the output image 112 with the output brightness of each pixel determined using the selected tone mapping curve. The image processing unit 104 outputs the output image 112.

### Example Global Tone Mapping Output

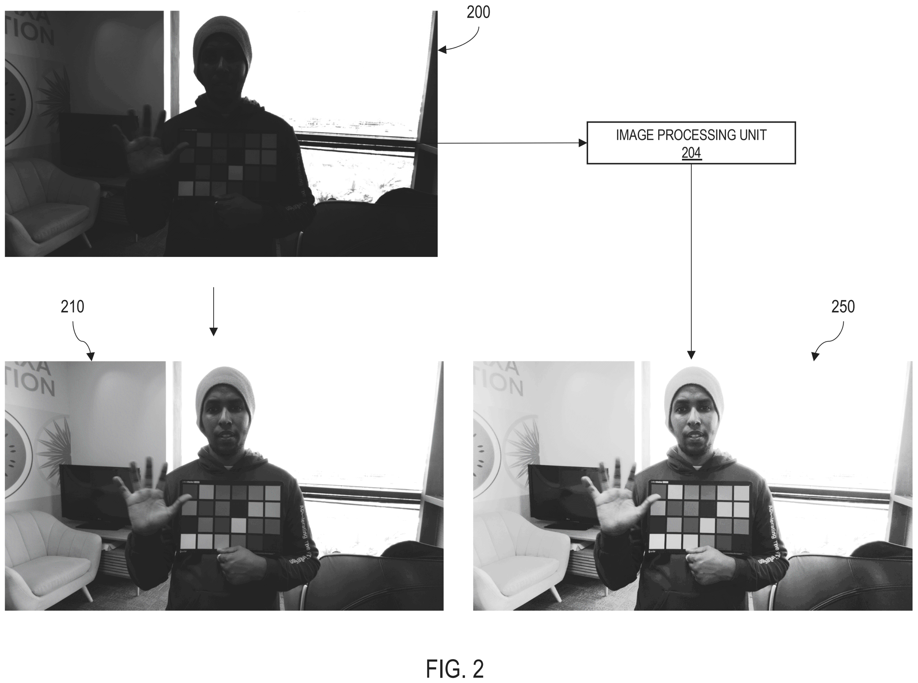

FIG. 2 illustrates an example of an image processed with a face discrimination tone mapping technique, in accordance with various embodiments. In particular, a scene captured by a camera is an indoor scene including a person in the foreground and a window in the background. The first image frame 200 illustrates the image as captured by the camera. The sun is shining through the window, resulting in a very bright area in the captured image 200. With the exception of the bright portion of the image 200 representing the window, the rest of the image 200, including the face of the person in the image, appears quite dark.

A traditional tone mapping curve can be applied to the image 200 to brighten the dark portions of the image 200, resulting in the image 210 of FIG. 2. As shown in the image 210, the facial features of the person are distinguishable but sill quite dark. The background other than the window is also brighter in the image 210.

In various implementations, a face discrimination tone mapping technique can be applied to the image 200 to generate the image 250, in which the features of the persons face are easily distinguishable and the brightness of the facial features is balanced. While the background of the image 250 is brighter and may be somewhat "washed out", the brightness of the person, who is the focus of the image 250, is well balanced, and the details of the person's features are clear and distinguishable. In various examples, an image processing unit 204 can apply the face discrimination tone mapping technique to the image 200 to generate the image 250. The image processing unit 204 can be substantially similar to the image processing unit 104 of FIG. 1.

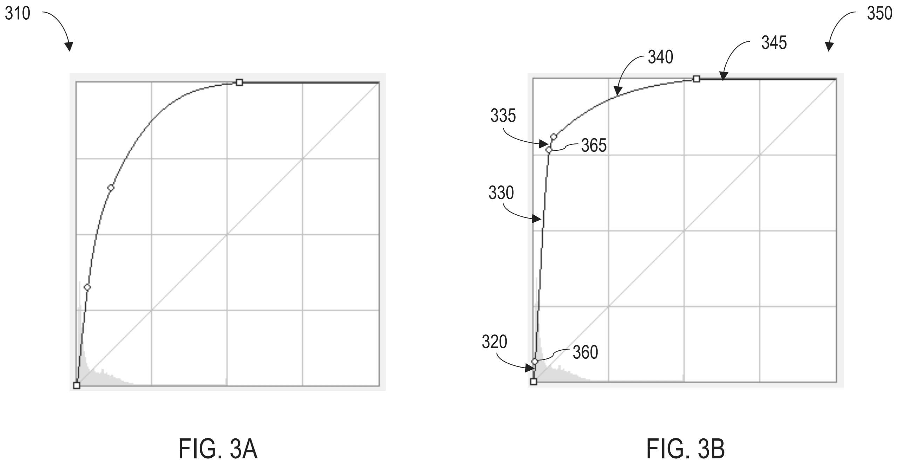

FIGS. 3A and 3B illustrate tone mapping curves, in accordance with various embodiments. In particular, the tone mapping curve 310 can be applied to the image 200 to generate the image 210 of FIG. 2. The tone mapping curve 350 can be applied to the image 200 to generate the image 250 of FIG. 2. The tone mapping curve 350 is a face discrimination tone mapping curve. The face discrimination tone mapping curve 350 includes a first portion 330 representing the pixels of the face of the person in the image 200, a second portion 320 representing the pixels of the image 200 that are darker than the darkest pixels of the face, and a third portion 340 representing pixels of the image 200 that are brighter than the brightest pixels of the face. There can be a transitional portion 335 of the curve between the first portion 330 and the third portion 340. The transitional portion 335 of the curve can be added to ensure a smooth transition between the first portion 330 and the third portion 340 of the curve, and prevent any artifacts in the image 250. Additionally, a final portion 345 of the curve is the portion at the white point, such that any input pixel with a brightness in the area past the end of the third portion 340 of the curve can be mapped to the white point.

The first portion 330 of the tone mapping curve is configured for reproduction of facial details with well-balanced brightness, tone, and visibility. In particular, a darkest pixel of the pixels of the portion of the image identified as the face is Xdark, a brightest pixel of the pixels of the portion of the image identified as the face is Xbright. As shown in FIG. 3B, for the tone mapping curve 350, a point Ydark is identified and a point Ybright is identified, such that a pixel having a brightness value equal to Xdark will be tone-mapped to a brightness value of Ydark, and a pixel having a brightness value of Xbright will be tone-mapped to a brightness value of Ybright. Additionally, a gamma value can be determined, where the gamma value harmonizes the tone mapping of the midtones between the point 360 (Xdark, Ydark) and the point 365 (Xbright, Ybright). As discussed above, the gamma value defines the brightness of the output image for tone mapping curve for the face. In some examples, the gamma value is determined based on a target image brightness, and in some examples, the gamma value is determined using iterative approximation. In various examples, the tone mapping curve for the face is in the form of y = x^gamma (*i.e*., Ydark = Xdark^gamma and Ybright = Xbright^gamma).

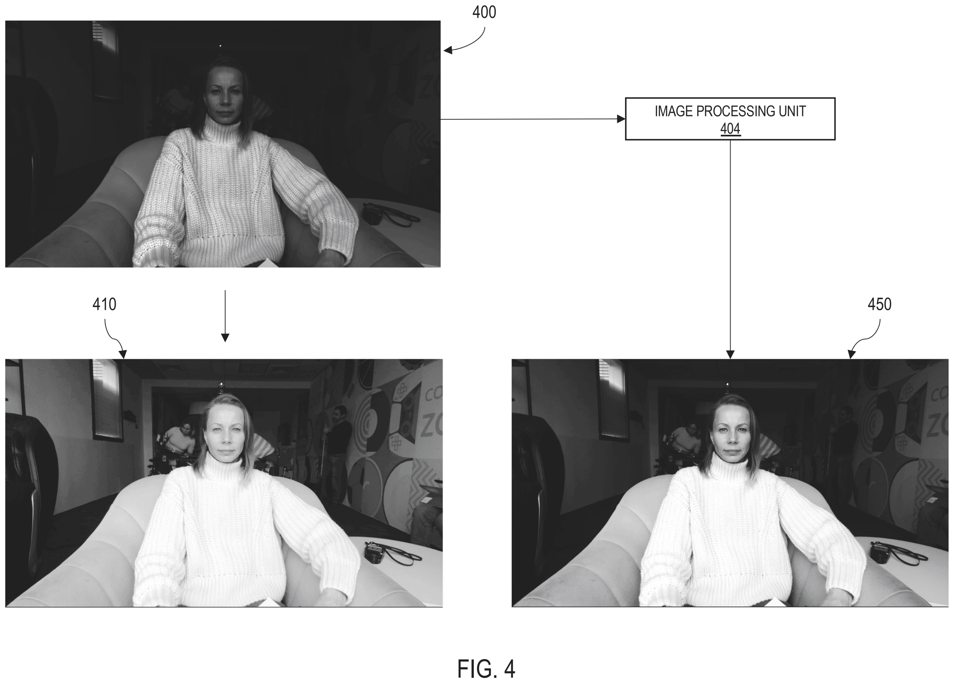

FIG. 4 illustrates another example of an image processed with a face discrimination tone mapping technique, in accordance with various embodiments. In particular, a scene captured by a camera is a dark indoor scene including a person in the foreground and a dark background. The first image frame 400 illustrates the image as captured by the camera. The image 400, including the face of the person in the image, appears quite dark.

A traditional tone mapping curve can be applied to the image 400 to brighten the image 400, resulting in the image 410 of FIG. 4. As shown in the image 410, the facial features of the person are distinguishable bright and somewhat "washed out". The background of the image 410 is brighter, and may be considered to be well tone balanced.

In various implementations, a face discrimination tone mapping technique can be applied to the image 400 to generate the image 450, in which the features of the persons face are easily distinguishable and the brightness of the facial features is tone balanced. While the background of the image 450 is darker and may be somewhat less focused and/or less well tone balanced, the brightness of the person, who is the focus of the image 450, is well balanced, and the details of the person's features are clear and distinguishable. In various examples, an image processing unit 404 can apply the face discrimination tone mapping technique to the image 400 to generate the image 450. The image processing unit 404 can be substantially similar to the image processing unit 104 of FIG. 1.

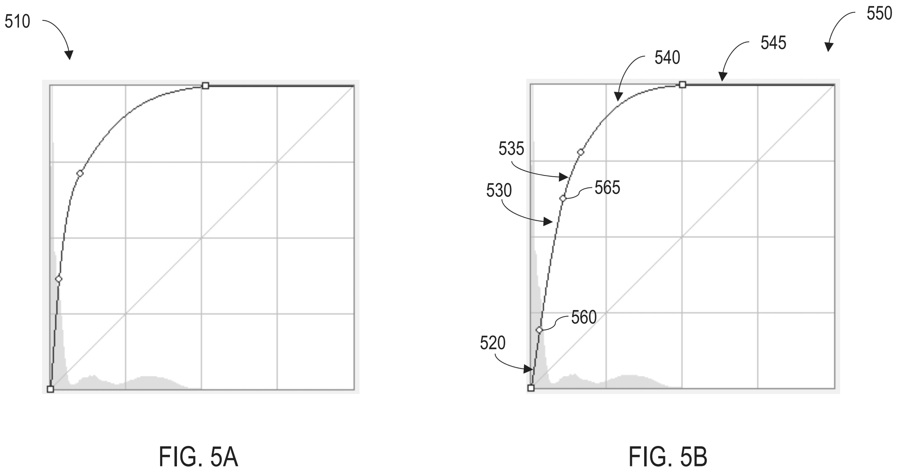

FIGS. 5A and 5B illustrate tone mapping curves, in accordance with various embodiments. In particular, the tone mapping curve 510 can be applied to the image 400 to generate the image 410 of FIG. 4. The tone mapping curve 550 can be applied to the image 400 to generate the image 450 of FIG. 4. The tone mapping curve 550 is a face discrimination tone mapping curve. The face discrimination tone mapping curve 550 includes a first portion 530 representing the pixels of the face of the person in the image 400, a second portion 520 representing the pixels of the image 400 that are darker than the darkest pixels of the face, and a third portion 540 representing pixels of the image 400 that are brighter than the brightest pixels of the face. There can be a transitional portion 535 of the curve between the first portion 530 and the third portion 540. The transitional portion 535 of the curve can be added to ensure a smooth transition between the first portion 530 and the third portion 540 of the curve, and prevent any artifacts in the image 450. Additionally, a final portion 545 of the curve is the portion at the white point, such that any input pixel with a brightness in the area past the end of the third portion 540 of the curve can be mapped to the white point.

As discussed above with respect to FIG. 3B, the first portion 530 of the tone mapping curve is configured for reproduction of facial details with well-balanced brightness, tone, and visibility. In particular, a darkest pixel of the pixels of the portion of the image identified as the face is Xdark, a brightest pixel of the pixels of the portion of the image identified as the face is Xbright. As shown in FIG. 5B, for the tone mapping curve 550, a point Ydark is identified and a point Ybright is identified, such that a pixel having a brightness value equal to Xdark will be tone-mapped to a brightness value of Ydark, and a pixel having a brightness value of Xbright will be tone-mapped to a brightness value of Ybright. Additionally, a gamma value can be determined, where the gamma value harmonizes the tone mapping of the midtones between the point 560 (Xdark, Ydark) and the point 565 (Xbright, Ybright).

### Example Method of Face Domination Tone Mapping

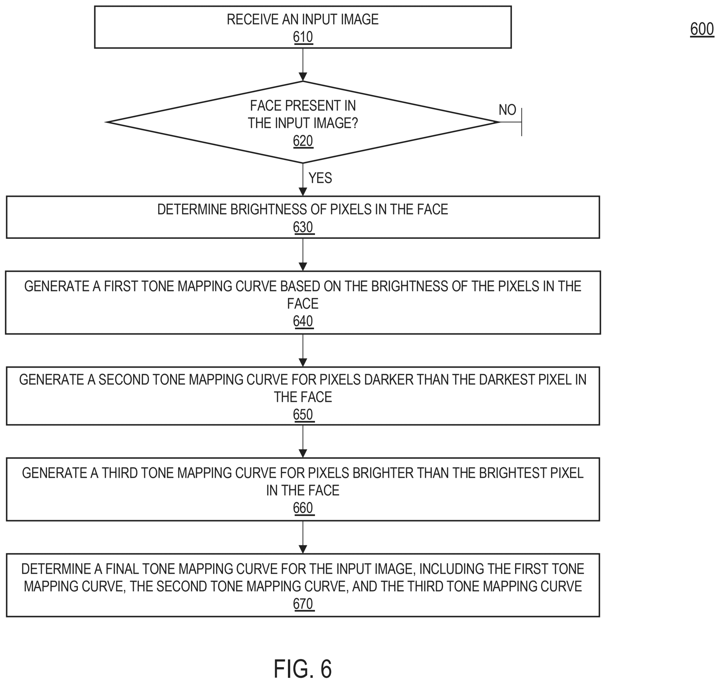

FIG. 6 is a flowchart showing a method 600 for generating a full tone mapping curve *TM(x),* in accordance with various embodiments. Although the method 600 is described with reference to the flowchart illustrated in FIG. 6, many other methods for face domination tone mapping may alternatively be used. For example, the order of execution of the elements in FIG. 6 may be changed. As another example, some of the steps may be changed, eliminated, or combined. In various examples, the method 600 can be implemented by an image processing unit such as the image processing unit 104 of FIG. 1.

At 610, an image is received from an imager, such as a camera or other image sensor. At 620, it is determined whether there is a face in the image. If there is no face in the image, the method 600 ends. If multiple faces are identified in the image, a primary face is identified. In particular, an image processing unit can identify a primary face for use in generating the tone mapping curve. If one face is identified in the image, the identified face is the primary face which will be used in generating the tone mapping curve.

At 630, the brightness of the pixels in the primary face is determined. In various implementations, the pixels of the primary face are a first portion of the image and are used to generate a first portion of a tone mapping curve. The darkest pixel in the first portion of the image is identified and labeled as parameter Xdark. The brightest pixel of the first portion of the image is identified and labeled as parameter Xbright. To generate the main tone mapping curve for the first portion of the image, a Ydark parameter is determined, where the Ydark parameter corresponds to the output value for the Xdark input parameter. Similarly, a Ybright parameter is determined, where the Ybright parameter corresponds to the output value for the Xbright input parameter. In some examples, a start and end brightness for the face range is predetermined, and the Ydark and Ybright parameters represent the predetermined start and end brightness values, which the input Xdark and Xbright values are mapped to. The tone mapping curve between the points (Xdark, Ydark) and (Xbright, Ybright) can be determined using a harmonization gamma value.

At 640, a first tone mapping curve is generated based on the brightness of the pixels in the primary face. For the first portion of the image, the output value is determined using the following equations: $normalized_input = \frac{\left({input}_{value}-Xdark\right)}{\left(Xbright-Xdark\right)}$ $output_value = Ydark + \left(Ybright-Ydark\right) ∗ {normalized_input}^{gamma}$

The above equations can be applied to each pixel in the first portion of the input image, including pixels with brightness values equal to Xdark and Xbright. The equations above can be used to generate the first portion of the tone mapping curve, wherein the first portion of the tone mapping curve represents the pixels of the primary face.

At 650, a second tone mapping curve is generated for a second portion of the image, where the second portion of the image includes pixels having a darker brightness value than the darkest pixel in the first portion of the image. That is, the second tone mapping curve is generated for pixels that are darker than the darkest pixels in the face. In some examples, a linear tone mapping can be used for the second portion of the image. For pixels having an input_value less than the value of Xdark, the following equation is used: $output_value = input_value ∗ \left(\frac{Ydark}{Xdark}\right)$

At 660, a third tone mapping curve is generated for a third portion of the image, where the third portion of the image includes pixels having a higher brightness value than the brightest pixel in the first portion of the image. That is, the third tone mapping curve is generated for pixels that are brighter than the brightest pixels in the face. For pixels having an input_value greater than the value of Xbright, the following equations are used: $slope_at_Xbright = gamma ∗ \frac{\left(Ybright-Ydark\right)}{\left(Xbright-Xdark\right)}$ $width = 1 - Xbright$ $height = 1 - Ybright$ $a = \frac{{height}^{2}}{\left(\frac{width - height}{slope at Xbright}\right)}$ $b = {\left(\frac{a}{2 ∗ slope at Xbright}\right)}^{2}$ $c = \sqrt{b}$

According to various examples, the variable *a* represents the coefficient controlling width of the curve of the third tone mapping curve, the variable b represents an offset parameter that ensures a smooth slope of the third tone mapping curve, and the variable *c* represents an adjustment to align the third tone mapping curve with a smooth transition. Using the above equations, a smooth transition curve can be generates using the following function: $f \left(x\right) = \sqrt{\left(a∗x+b\right)} - c$

Then, the output values for pixels having an input_value greater than the value of Xbright, the following equation is used: $output_value = f \left(input_value-Xbright\right) + Ybright$

At 670, a final tone mapping curve for the input image can be determined based on the first tone mapping curve, the second tone mapping curve, and the third tone mapping curve. In particular, the three tone mapping curves can be combined to generate the final tone mapping curve. The first tone mapping curve can be used for input values greater than or equal to Xdark and less than or equal to Xbright. The second tone mapping curve can be used for input values less than Xdark, and the third tone mapping curve can be used for input values greater than Xbright.

### Example Computing Device

FIG. 7 is a block diagram of an example computing device 700, in accordance with various embodiments. In some embodiments, the computing device 700 may be used for at least part of the deep learning system 600 in FIG. 6. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include a video input device 718 or a video output device 708, but may include video input or output device interface circuitry (e.g., connectors and supporting circuitry) to which a video input device 718 or video output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable for occupancy mapping or collision detection, e.g., the methods 400 and 500 described above in conjunction with FIGS. 4 and 5, or some operations performed by the image processing unit 104 of FIG. 1, or some operations performed by the DNN system 600 of FIG. 6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data using modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with code-division multiple access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include a video output device 708 (or corresponding interface circuitry, as discussed above). The video output device 708 may include any device that generates an audible indicator, such as speakers, headsets, or earbuds, for example.

The computing device 700 may include a video input device 718 (or corresponding interface circuitry, as discussed above). The video input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include a video codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

### Selected Examples

The following paragraphs provide various examples of the embodiments disclosed herein.

Example 1 provides a computer-implemented method, including receiving an input image from an imager; detecting a face in the input image; determining brightness of pixels in a first portion of the input image, where the first portion includes pixels of the face; generating, based on the brightness of the pixels in the first portion of the input image, a first tone mapping curve for the first portion of the input image; generating a second tone mapping curve for a second portion of the input image, where the second portion of the input image includes pixels darker than a darkest pixel in the first portion of the input image; generating a third tone mapping curve for a third portion of the input image, where the third portion of the input image includes pixels brighter than a brightest pixel in the first portion of the input image; and generating a final tone mapping curve for the input image, including the first tone mapping curve, the second tone mapping curve and the third tone mapping curve, where the final tone mapping curve maps a measured input brightness level to a target output brightness level for pixels in the input image.

Example 2 provides the computer-implemented method according to example 1, further including determining the darkest value in the first portion of the input image (Xdark) and determining the brightest value in the first portion of the input image (Xbright).

Example 3 provides the computer-implemented method according to example 2, further including identifying a target darkest output value for the darkest value in the first portion of the input image (Ydark) and a target brightest output value for the brightest value in the first portion of the input image (Ybright).

Example 4 provides the computer-implemented method according to example 3, further including determining a harmonization gamma value[AK1] , and generating first tone mapping curve output values for points between (Xdark, Ydark) and (Xbright, Ybright) based on the harmonization gamma value.

Example 5 provides the computer-implemented method according to example 4, where generating the second tone mapping curve for the second portion of the input image includes interpolating between an origin point and (Xdark, Ydark).

Example 6 provides the computer-implemented method according to any of examples 4-5, where generating the third tone mapping curve for the third portion of the input image includes interpolating from (Xbright, Ybright) to a white point.

Example 7 provides the computer-implemented method according to any of examples 1-6, where generating the final tone mapping curve includes generating a smooth connection between the first tone mapping curve and the first tone mapping curve, such that the final tone mapping curve results in an artifact-free output image.

Example 8 provides one or more non-transitory computer-readable media storing instructions executable to perform operations, the operations including receiving an input image from an imager; detecting a face in the input image; determining brightness of pixels in a first portion of the input image, where the first portion includes pixels of the face; generating, based on the brightness of the pixels in the first portion of the input image, a first tone mapping curve for the first portion of the input image; generating a second tone mapping curve for a second portion of the input image, where the second portion of the input image includes pixels darker than a darkest pixel in the first portion; generating a third tone mapping curve for a third portion of the input image, where the third portion of the input image includes pixels brighter than a brightest pixel in the first portion; and generating a final tone mapping curve for the input image, including the first tone mapping curve, the second tone mapping curve and the third tone mapping curve, where the final tone mapping curve maps a measured input brightness level to a target output brightness level for pixels in the input image.

Example 9 provides the one or more non-transitory computer-readable media according to example 8, the operations further including determining the darkest value in the first portion of the input image (Xdark) and determining the brightest value in the first portion of the input image (Xbright).

Example 10 provides the one or more non-transitory computer-readable media according to example 9, the operations further including identifying a target darkest output value for the darkest value in the first portion of the input image (Ydark) and a target brightest output value for the brightest value in the first portion of the input image (Ybright).

Example 11 provides the one or more non-transitory computer-readable media according to example 10, the operations further including determining a harmonization gamma value[AK2] , and generating first tone mapping curve output values for points between (Xdark, Ydark) and (Xbright, Ybright) based on the harmonization gamma value.

Example 12 provides the one or more non-transitory computer-readable media according to example 11, where generating the second tone mapping curve for the second portion of the input image includes interpolating between an origin point and (Xdark, Ydark).

Example 13 provides the one or more non-transitory computer-readable media according to any of examples 11-12, where generating the third tone mapping curve for the third portion of the input image includes interpolating from (Xbright, Ybright) to a white point.

Example 14 provides the one or more non-transitory computer-readable media according to any of examples 8-13, where generating the final tone mapping curve includes generating a smooth connection between the first tone mapping curve and the first tone mapping curve, such that the final tone mapping curve results in an artifact-free output image.

Example 15 provides an apparatus, including a computer processor for executing computer program instructions; and a non-transitory computer-readable memory storing computer program instructions executable by the computer processor to perform operations including receiving an input image from an imager; detecting a face in the input image; determining brightness of pixels in a first portion of the input image, where the first portion includes pixels of the face; generating, based on the brightness of the pixels in the first portion of the input image, a first tone mapping curve for the first portion of the input image; generating a second tone mapping curve for a second portion of the input image, where the second portion of the input image includes pixels darker than a darkest pixel in the first portion; generating a third tone mapping curve for a third portion of the input image, where the third portion of the input image includes pixels brighter than a brightest pixel in the first portion; and generating a final tone mapping curve for the input image, including the first tone mapping curve, the second tone mapping curve and the third tone mapping curve, where the final tone mapping curve maps a measured input brightness level to a target output brightness level for pixels in the input image.

Example 16 provides the apparatus according to example 15, where the operations further include determining the darkest value in the first portion of the input image (Xdark) and determining the brightest value in the first portion of the input image (Xbright).

Example 17 provides the apparatus according to example 16, where the operations further include identifying a target darkest output value for the darkest value in the first portion of the input image (Ydark) and a target brightest output value for the brightest value in the first portion of the input image (Ybright).

Example 18 provides the apparatus according to example 17, where the operations further include determining a harmonization gamma value, and generating first tone mapping curve output values for points between (Xdark, Ydark) and (Xbright, Ybright) based on the harmonization gamma value.

Example 19 provides the apparatus according to example 18, where generating the second tone mapping curve for the second portion of the input image includes interpolating between an origin point and (Xdark, Ydark).

Example 20 provides the apparatus according to any of examples 18-19, where generating the third tone mapping curve for the third portion of the input image includes interpolating from (Xbright, Ybright) to a white point.

Example 21 provides a computer-implemented method, one or more non-transitory computer-readable media, and/or an apparatus according to any of the above examples, wherein the white point is a highest pixel brightness level.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A computer-implemented method, comprising:
receiving an input image from an imager;
detecting a face in the input image;
determining brightness of pixels in a first portion of the input image, wherein the first portion includes pixels of the face;
generating, based on the brightness of the pixels in the first portion of the input image, a first tone mapping curve for the first portion of the input image;
generating a second tone mapping curve for a second portion of the input image, wherein the second portion of the input image includes pixels darker than a darkest pixel in the first portion of the input image;
generating a third tone mapping curve for a third portion of the input image, wherein the third portion of the input image includes pixels brighter than a brightest pixel in the first portion of the input image; and
generating a final tone mapping curve for the input image, including the first tone mapping curve, the second tone mapping curve and the third tone mapping curve, wherein the final tone mapping curve maps a measured input brightness level to a target output brightness level for pixels in the input image.

2. The computer-implemented method according to claim 1, further comprising determining the darkest value in the first portion of the input image (Xdark) and determining the brightest value in the first portion of the input image (Xbright).

3. The computer-implemented method according to claim 2, further comprising identifying a target darkest output value for the darkest value in the first portion of the input image (Ydark) and a target brightest output value for the brightest value in the first portion of the input image (Ybright).

4. The computer-implemented method according to claim 3, further comprising determining a harmonization gamma value, and generating first tone mapping curve output values for points between (Xdark, Ydark) and (Xbright, Ybright) based on the harmonization gamma value.

5. The computer-implemented method according to claim 3 or claim 4, wherein generating the second tone mapping curve for the second portion of the input image comprises interpolating between an origin point and (Xdark, Ydark).

6. The computer-implemented method according to any of claims 3-5, wherein generating the third tone mapping curve for the third portion of the input image comprises interpolating from (Xbright, Ybright) to a white point.

7. The computer-implemented method according to any of claims 1-6, wherein generating the final tone mapping curve includes generating a smooth connection between the first tone mapping curve and the first tone mapping curve, such that the final tone mapping curve results in an artifact-free output image.

8. One or more non-transitory computer-readable media storing instructions executable to perform operations, the operations comprising:
receiving an input image from an imager;
detecting a face in the input image;
determining brightness of pixels in a first portion of the input image, wherein the first portion includes pixels of the face;
generating, based on the brightness of the pixels in the first portion of the input image, a first tone mapping curve for the first portion of the input image;
generating a second tone mapping curve for a second portion of the input image, wherein the second portion of the input image includes pixels darker than a darkest pixel in the first portion;
generating a third tone mapping curve for a third portion of the input image, wherein the third portion of the input image includes pixels brighter than a brightest pixel in the first portion; and
generating a final tone mapping curve for the input image, including the first tone mapping curve, the second tone mapping curve and the third tone mapping curve, wherein the final tone mapping curve maps a measured input brightness level to a target output brightness level for pixels in the input image.

9. The one or more non-transitory computer-readable media according to claim 8, the operations further comprising determining the darkest value in the first portion of the input image (Xdark) and determining the brightest value in the first portion of the input image (Xbright).

10. An apparatus, comprising:
a computer processor for executing computer program instructions; and
a non-transitory computer-readable memory storing computer program instructions executable by the computer processor to perform operations comprising:
receiving an input image from an imager;
detecting a face in the input image;
determining brightness of pixels in a first portion of the input image, wherein the first portion includes pixels of the face;
generating, based on the brightness of the pixels in the first portion of the input image, a first tone mapping curve for the first portion of the input image;
generating a second tone mapping curve for a second portion of the input image, wherein the second portion of the input image includes pixels darker than a darkest pixel in the first portion;
generating a third tone mapping curve for a third portion of the input image, wherein the third portion of the input image includes pixels brighter than a brightest pixel in the first portion; and
generating a final tone mapping curve for the input image, including the first tone mapping curve, the second tone mapping curve and the third tone mapping curve, wherein the final tone mapping curve maps a measured input brightness level to a target output brightness level for pixels in the input image.

11. The apparatus according to claim 10, wherein the operations further comprise determining the darkest value in the first portion of the input image (Xdark) and determining the brightest value in the first portion of the input image (Xbright).

12. The apparatus according to claim 11, wherein the operations further comprise identifying a target darkest output value for the darkest value in the first portion of the input image (Ydark) and a target brightest output value for the brightest value in the first portion of the input image (Ybright).

13. The apparatus according to claim 12, wherein the operations further comprise determining a harmonization gamma value, and generating first tone mapping curve output values for points between (Xdark, Ydark) and (Xbright, Ybright) based on the harmonization gamma value.

14. The apparatus according to claim 12 or claim 13, wherein generating the second tone mapping curve for the second portion of the input image comprises interpolating between an origin point and (Xdark, Ydark).

15. The apparatus according to any of claims 12-14, wherein generating the third tone mapping curve for the third portion of the input image comprises interpolating from (Xbright, Ybright) to a white point.
